# EUROPEAN PATENT APPLICATION

(11) **EP 4 715 987 A1**
(43) Date of publication of application: **25.03.2026**
(21) Application number: 24937904.1
(22) Date of filing: 18.12.2024
(51) Int. Cl.: H01M 50/271, H01M 50/282, H01M 50/342, H01M 50/249

(54) **BATTERY PACK AND DEVICE COMPRISING SAME**

(30) Priority: 30.04.2024 KR 20240057822
(71) Applicant: LG Energy Solution, Ltd., Seoul 07335 (KR)
(72) Inventor: JUNG, Kitaek, Daejeon 34122 (KR); KANG, Jae Hyuk, Daejeon 34122 (KR); PARK, Sangjun, Daejeon 34122 (KR)
(74) Representative: BCKIP Part mbB
(86) International application number: PCT/KR2024/020566
(87) International publication number: WO 2025/230081

(57) **Abstract**

A battery pack according to an embodiment of the present disclosure comprises: a battery module; a pack frame in which the battery module is housed and one side thereof is open; a pack cover that covers the open one side of the pack frame; and a fire-resistant sheet attached to one end of the pack cover. The battery module comprises a battery cell stack in which a plurality of battery cells are stacked; a venting part formed on one surface of the battery module to discharge venting gas; and a protruding pin that protrudes toward the pack cover on one surface of the battery module.

## Description

### [TECHNICAL FIELD]

### Cross-Reference to Related Application(s)

This application claims priority to and the benefit of Korean Patent Application No. 10-2024-0057822, filed on April 30, 2024, with the Korean Intellectual Property Office, the disclosure of which is incorporated herein by reference in its entirety.

The present disclosure relates to a battery pack and a device including the same, and more particularly, to a battery pack that can effectively control propagation of heat and a device including the same.

### [BACKGROUND]

The use of mobile devices such as cell phones, laptops, camcorders, and digital cameras has been routinized in modern society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles (EV), hybrid electric vehicles (HEV), plug-in hybrid electric vehicles (P-HEV) and so on. Thus, the necessity to develop the secondary batteries is increasing.

Presently, commercially available batteries include nickel-cadmium batteries, nickel-hydrogen batteries, nickel-zinc batteries, and lithium batteries. Of these batteries, lithium secondary batteries are emerging as the most popular, as they do not suffer from the memory effect, and therefore, are freely rechargeable, have low self-discharge rates, and have high energy density, as compared to nickel-based secondary batteries.

Typically, a lithium secondary battery uses a lithium-based oxide and a carbon material as a positive electrode active material and a negative electrode active material, respectively. The lithium secondary battery includes an electrode assembly fabricated by disposing a separator between a positive electrode plate and a negative electrode plate, which are coated with the positive electrode active material and the negative electrode active material, respectively, and a battery case that hermetically houses the electrode assembly together with an electrolyte.

In general, according to the exterior shapes of battery cases, lithium secondary batteries may be classified into can-shaped secondary batteries fabricated by mounting the electrode assembly in a metal can, and pouch-shaped secondary batteries fabricated by mounting the electrode assembly in a pouch made of an aluminum laminate sheet.

In case of secondary batteries used for small-size devices, two or three battery cells are arranged, and in case of secondary batteries used for medium- and large-size devices such as automobiles, a battery module is used, which includes multiple battery cells electrically connected to each other. In the battery module, the multiple battery cells are connected in series or parallel to form a battery cell stack, which improves the capacity and the power. One or more battery modules may configure a battery pack by being mounted together with various control and protection systems such as a battery disconnect unit (BDU), a battery management system (BMS), and a cooling system.

A battery pack may include a battery module as a subordinate concept thereof, and the battery module may include a battery cell as a subordinate concept thereof. In addition, the number of battery cells included in the battery module or the number of battery modules included in the battery pack may be variously determined according to the output or capacity of the battery pack required for an electric vehicle.

However, safety is one of the most important issues in such a battery pack. In particular, when a thermal event occurs in any of a plurality of battery cells included in a battery pack, high-temperature venting gas and heat are generated. In order to protect the battery pack from such high-temperature venting gas and heat, and to discharge the high-temperature venting gas and heat to the outside, a venting space must be secured and maintained inside the battery pack.

The battery pack may include a pack cover that covers one end of the battery pack, and a fire-resistant sheet may be attached to one end of the pack cover. Such a fire-resistant sheet may protect the pack cover from high-temperature venting gas and heat discharged from the battery module. However, when time elapses or thermal event occurs, the fire-resistant sheet may be separated from the pack cover while the performance of the heat-resistant adhesive being deteriorated due to heat. If the fire-resistant sheet is sagged or is separated from the pack cover, the venting space through which the venting gas is discharged may be reduced, which can deteriorate thermal management performance of the battery module.

### [DETAILED DESCRIPTION OF THE INVENTION]

### [Technical Problem]

The object to solved by the invention is to prevent the fire-resistant sheet from being sagged or separated from the pack cover when time elapses or thermal event occurs. Specifically, an object of the present disclosure is to provide a battery pack that can prevent the fire-resistant sheet from being sagged or separated from the pack cover, thereby effectively controlling propagation of heat, and a battery pack including the same.

However, the technical objects solved by the embodiments of the present disclosure are not limited to those disclosed above, and may be expanded in various ways within the scope of the technical idea included in the present disclosure.

### [Technical Solution]

A battery pack according to an embodiment of the present disclosure comprises: a battery module; a pack frame in which the battery module is housed and one side thereof is open; a pack cover that covers the open one side of the pack frame; and a fire-resistant sheet attached to one end of the pack cover. The battery module comprises: a battery cell stack in which a plurality of battery cells are stacked; a venting part formed on one surface of the battery module to discharge venting gas; and a protruding pin that protrudes toward the pack cover on one surface of the battery module.

The protruding pin may extend along the direction in which the battery cells are stacked.

The protruding pin may extend along a direction perpendicular to the direction in which the battery cells are stacked.

The protruding pin may be disposed between the venting parts.

The protruding pin may abut on the fire-resistant sheet.

The battery module comprises a module frame in which the battery cell stack is housed and one side thereof is open; and a top cover assembly that covers the open one surface of the module frame, wherein the protruding pin may be provided on the top cover assembly.

The top cover assembly may comprise a top plate located on one side of the battery cells; and a top cover that covers one surface of the top plate.

The protruding pin may be formed on the top plate, and protruded to one side through the top cover.

The venting part may include at least one venting hole formed in the top plate to discharge gas inside the module frame.

The venting part may include a rupture part having a structure which is formed on the top cover, located to correspond to the venting hole, and ruptured at a specified pressure or higher

An opening is formed in a region excluding a connecting part among the periphery of the rupture part, and the rupture part is formed to be connected to the top cover by the connecting part.

According to another embodiment of the present disclosure, a device comprising the battery pack is provided.

### [Advantageous Effects]

According to embodiments of the present disclosure, a plurality of protruding pins protruding toward the pack cover are applied to the module top plate provided at one end of the battery module, which prevents the fire-resistant sheet from being sagged or separated from the pack cover, thereby effectively controlling propagation of heat.

The effects of the present disclosure are not limited to the effects mentioned above and additional other effects not described above will be clearly understood from the description of the appended claims by those skilled in the art.

### [BRIEF DESCRIPTION OF THE DRAWING]

FIG. 1 is a partial perspective view showing a part of a battery pack according to an embodiment of the present disclosure.
FIG. 2 is a cross-sectional view showing a part of a cross section cut along the cutting line A-A' of FIG. 1.
FIG. 3 is a perspective view showing a battery module according to an embodiment of the present disclosure.
FIG. 4 is a plan view of the battery module of FIG. 3 as viewed from above.
FIG. 5 is an exploded perspective view of the battery module of FIG. 3.
FIG. 6 is a perspective view showing a battery cell stack, a first busbar frame, and a second busbar frame included in the battery modules of FIGS. 3 and 5.
FIGS. 7 to 9 are perspective views showing battery modules according to another embodiment of the present disclosure.
FIG. 10 is an exploded perspective view of a top cover assembly according to an embodiment of the present disclosure.
FIG. 11 is a perspective view showing a top plate of the top cover assembly of FIG. 10.
FIG. 12 is a partially enlarged perspective view showing the portion "B" of FIG. 11.
FIG. 13 is a partial perspective view showing the top cover of the top cover assembly of FIG. 10.
FIG. 14 is a partially enlarged perspective view showing the portion "C" of FIG. 13.
FIG. 15 is a plan view of a top plate according to an embodiment of the present disclosure as viewed from above.
FIG. 16 is a plan view of a top cover according to an embodiment of the present disclosure as viewed from above.
FIGS. 17 and 18 are cross-sectional views showing venting parts according to other embodiments of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

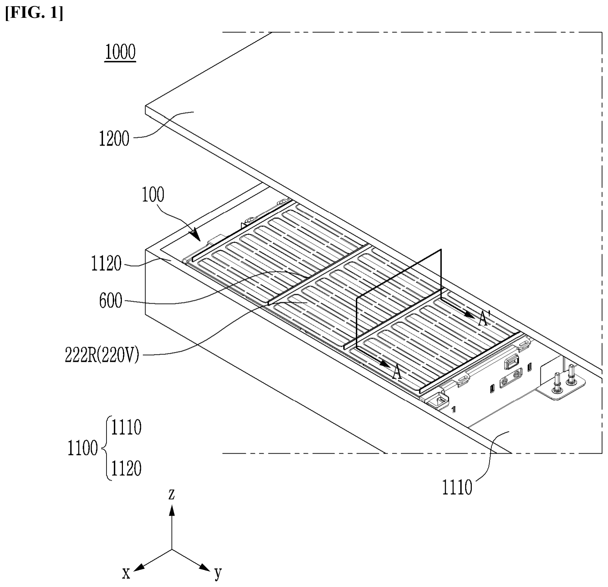

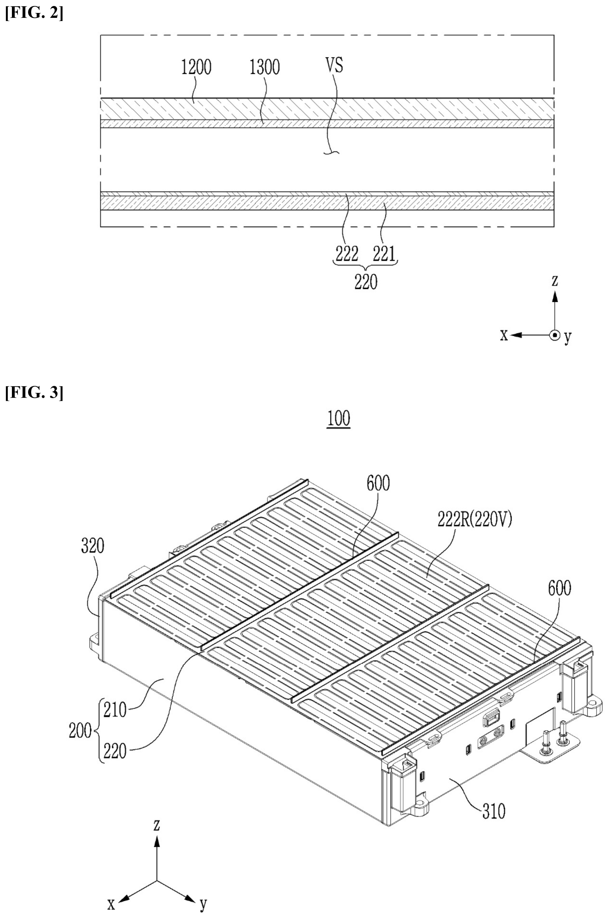

FIG. 1 is a partial perspective view showing a part of a battery pack 1000 according to an embodiment of the present disclosure. FIG. 2 is a cross-sectional view showing a part of a cross section cut along the cutting line A-A' of FIG. 1.

Referring to FIGS. 1 and 2, a battery pack 1000 according to an embodiment of the present disclosure comprises: a battery module 100; a pack frame 1100 in which the battery module 100 is housed and one side thereof is open; a pack cover 1200 that covers the open one side of the pack frame 1100; and a fire-resistant sheet 1300 attached to one end of the pack cover 1200.

The pack frame 1100 may include a bottom frame 1110 on which at least one battery module 100 is placed, and a side surface frame 1120 that extends along the edge of the bottom frame 1110. The side surface frame 1120 may extend in a direction perpendicular to one surface of the bottom frame 1110. An internal space having an open one side is provided by the bottom frame 1110 and the side surface frame 1120, and at least one battery module 100 may be housed in the internal space.

Meanwhile, the pack cover 1200 may cover the open one side of the pack frame 1100.

The battery pack 1000 according to the present embodiment may further include a fire-resistant sheet 1300 attached to the lower surface of the pack cover 1200 between the battery module 100 and the pack cover 1200. The fire-resistant sheet 1300 may protect the pack cover 1200 from high-temperature venting gas and heat discharged from the battery module 100. As an example, the fire-resistant sheet 1300 may be a thin plate-shaped sheet containing a MICA material, and may be attached to the lower surface of the pack cover 1200 by a heat-resistant adhesive.

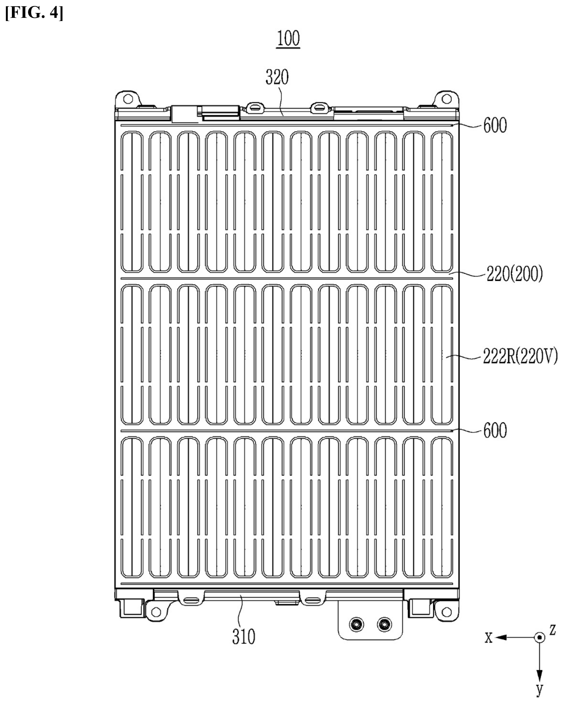

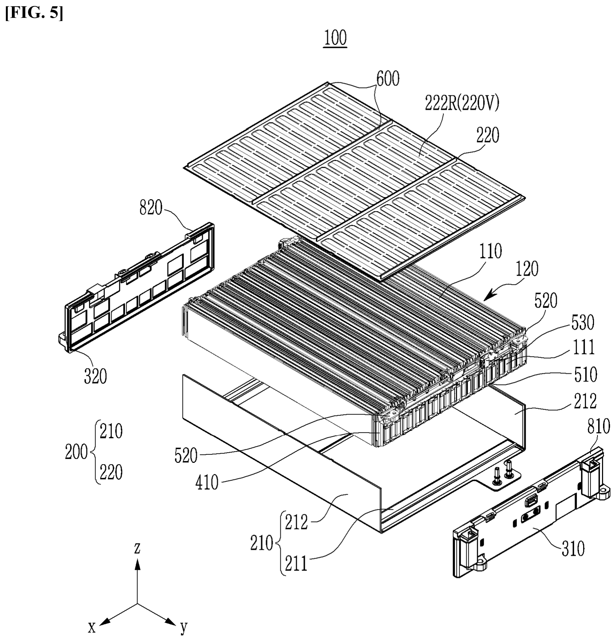

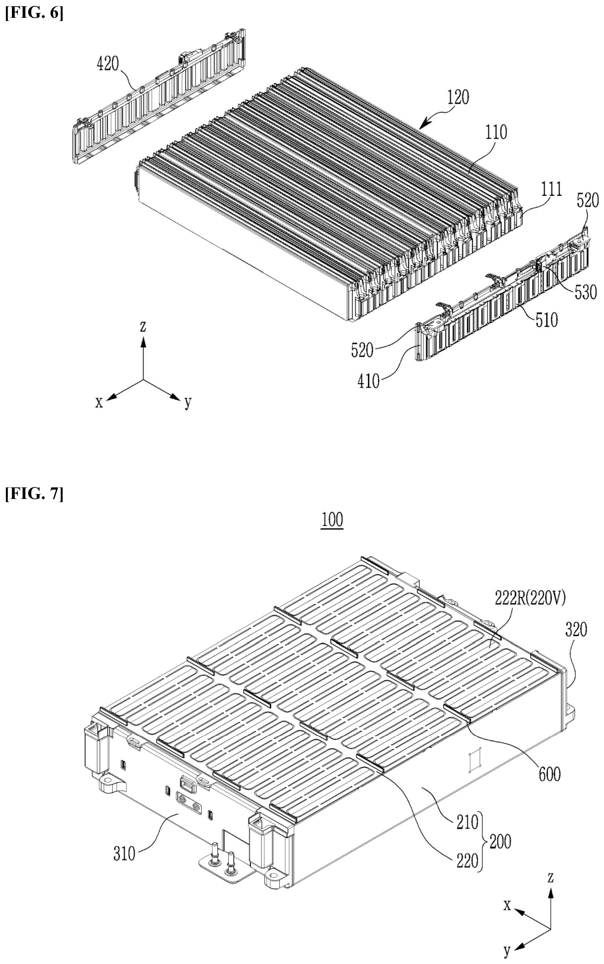

FIG. 3 is a perspective view showing a battery module 100 according to an embodiment of the present disclosure. FIG. 4 is a plan view of the battery module 100 of FIG. 3 as viewed from above. FIG. 5 is an exploded perspective view of the battery module 100 of FIG. 3. FIG. 6 is a perspective view showing a battery cell stack 120, a first busbar frame 410, and a second busbar frame 420 included in the battery modules 100 of FIGS. 3 and 5.

Referring to FIGS. 1 to 6, a battery module 100 according to an embodiment of the present disclosure includes a battery cell stack 120 in which a plurality of battery cells 110 are stacked; a venting part 220V formed on one surface of the battery module 100 to discharge venting gas; and a protruding pin 600 that protrudes toward a pack cover 1200 from one surface of the battery module 100.

The battery module 100 according to the present embodiment may include a plurality of battery cells 110. The battery cell 110 according to the present embodiment may be various types of battery cells, for example, a pouch-type battery cell, a prismatic battery cell, or a cylindrical battery cell. As an example, as shown in FIGS. 4 to 6, the battery cell 110 according to the present embodiment may be a pouch-type battery cell. Below, a pouch-type battery cell will be described, but the battery cell 110 according to the present embodiment is not limited thereto, and various types of battery cells may be applied.

The battery cells 110 may be formed by a plurality of numbers within the battery module 100. As an example, the plurality of battery cells 110 may be stacked along one direction so as to be electrically connected to each other, thereby forming a battery cell stack 120. As an example, a plurality of battery cells 110 may be stacked along a direction parallel to the x-axis in the standing upright state. The battery cells 110 may be stacked from one side surface part 212 to the other side surface part 212 of the bottom frame 210 in a state that one surface of the battery cell 110 is parallel to the side surface parts 212 of the bottom frame 210. As a result, the electrode leads 111 can protrude in a direction perpendicular to the direction in which the battery cells 110 are stacked. In the battery cell 110, one electrode lead 111 may protrude toward the y-axis direction, and the other electrode lead 111 may protrude toward the -y-axis direction. If the electrode leads 111 are battery cells that protrude only in one direction, the electrode leads 111 may protrude in the y-axis direction or the -y-axis direction.

The battery module 100 according to the present embodiment may have a one-sided venting structure that discharges high-temperature venting gas and heat caused by a thermal event in one-side direction.

The venting part 220V in the present disclosure refers collectively to a mechanism that discharges high-temperature venting gas and heat generated inside the battery module 100 to the outside of the battery module 100. That is, if it is possible to discharge high-temperature venting gas and heat generated inside the battery module 100 due to a thermal event, the structure or shape of the venting part 220V are not particularly limited. In the case of the battery module 100 according to the present embodiment, high-temperature venting gas and heat due to a thermal event can be discharged in one-side direction through the venting part 220V.

The battery module 100 according to the present embodiment includes a protruding pin 600 that protrudes in one-side direction on one surface of the battery module 100. The protruding pin 600 may protrude toward the pack cover 1200 from one surface of the battery module 100. The protruding pin 600 makes it possible to secure and maintain a venting space through which high-temperature vent gas and heat can flow between the battery module 100 and the pack cover 1200.

At this time, the protruding pin 600 protruding in one-side direction from one surface of the battery module 100 can secure and maintain a venting space VS through which high-temperature venting gas and heat can flow between the battery module 100 and the pack cover 1200. In order to protect the battery pack 1000 from high-temperature venting gas and heat generated by a thermal event or thermal runaway and to stably discharge them to the outside of the battery pack 1000, the venting space VS must be stably secured and maintained within the battery pack 1000. If the pack cover 1200 is bent inward or adheres closely to the battery module 100 such that sufficient venting space VS is not secured and maintained, it is difficult for the high-temperature venting gas and heat discharged from the venting part 220V of the battery module 100 to be discharged to the outside of the battery pack 1000. If the high-temperature venting gas and heat are not smoothly discharged to the outside of the battery pack 1000, it may lead to an explosion or fire of the battery pack 1000. In addition, as time elapses and the performance of the heat-resistant adhesive deteriorates, the fire-resistant sheet 1300 may be separated from the pack cover 1200.

Thus, in the present embodiment, a protruding pin 600 protruding in one-side direction on one surface of the battery module 100 is provided, thereby realizing a structure capable of supporting the pack cover 1200 and the fire-resistant sheet 1300. The degree of protrusion of the protruding pin 600 is not particularly limited as long as a minimum venting space VS can be secured. The degree of protrusion of the protruding pin 600 can be adjusted in consideration of the size of the battery module 100 and the gap between the battery module 100 and the pack cover 1200, and the protruding pin 600 can be in contact with the pack cover 1200 or spaced apart from the pack cover 1200. That is, in the case of the battery pack 1000 according to the present embodiment, since the venting space VS through which the high-temperature venting gas and heat flow can be secured and maintained between the battery module 100 and the pack cover 1200, the safety of the battery pack 1000 is improved.

If there is no protruding pin 600 protruding toward the fire-resistant sheet 1300, the detached fire-resistant sheet 1300 covers the venting part 220V, and the high-temperature venting gas and heat cannot be properly discharged. On the other hand, in the case of the present embodiment, even if the fire-resistant sheet 1300 is separated from the pack cover 1200, the protruding pin 600 can secure and maintain the venting space VS between the battery module 100 and the fire-resistant sheet 1300 while supporting the separated fire-resistant sheet 1300. That is, in the case of the battery pack 1000 according to the present embodiment, since the high-temperature venting gas and the venting space VS through which heat flows can be secured and maintained between the battery module 100 and the fire-resistant sheet 1300, the safety of the battery pack 1000 is improved.

The number of protruding pins 600 is not particularly limited, but the protruding pins 600 are preferably formed in a plurality of numbers so as to be evenly distributed on one surface of the battery module 100 in order to secure and maintain a venting space VS. Further, the specific shape or configuration of the protruding pins 600 are not particularly limited as long as they are in a form that protrudes from one surface of the battery module 100.

The first busbar frame 410 and the second busbar frame 420 will be described in detail below.

Referring again to FIGS. 1 to 6, according to an embodiment of the present disclosure, the protruding pins 600 can extend along the direction in which the battery cells 110 are stacked.

As mentioned above, a plurality of battery cells 110 may be stacked in one direction (x-axis direction in FIG. 5) to be electrically connected to each other, thereby forming the battery cell stack 120. In particular, referring to FIGS. 3 to 5, the protruding pin 600 can be extended along the direction in which the battery cells 110 are stacked, which makes it possible to guide the discharge direction of high-temperature venting gas and heat discharged from the venting part 220V described below. That is, when the protruding pin 600 is stacked along the direction in which the battery cells 110 are stacked as in the present embodiment, the high-temperature venting gas and heat can be discharged along the direction in which the battery cells 110 are stacked (the x-axis direction of FIG. 5).

Below, battery modules 100 to which protruding pin 600 are applied in various ways to continuously guide the discharge direction of high-temperature venting gas and heat discharged from the venting part 220V are described.

FIGS. 7 to 9 are perspective views showing battery modules 100 according to another embodiment of the present disclosure.

Referring to FIG. 7, the protruding pin 600 according to an embodiment of the present disclosure extends along the direction in which the battery cells 110 are stacked, but each protruding pin 600 is not continuously connected from one end to the other end of the battery module, and the center of the protruding pin 600 may be broken. That is, as compared to the protruding pin 600 shown in FIG. 6, the protruding pin 600 in the present embodiment may be considered to play a smaller role in guiding the discharge direction of the high-temperature venting gas and heat discharged from the venting part 220V.

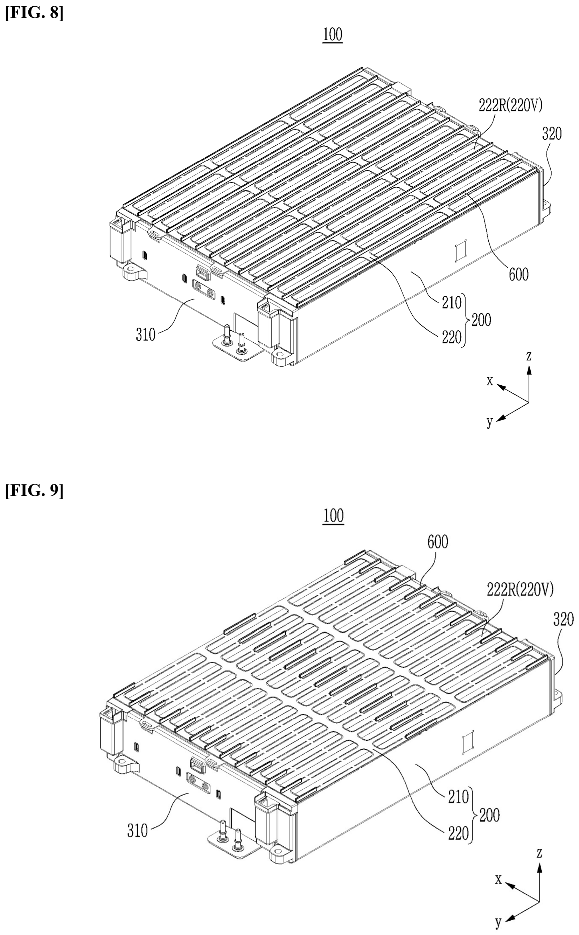

Referring to FIG. 8, the protruding pin 600 according to an embodiment of the present disclosure may extend along a direction perpendicular to the direction in which the battery cells 110 are stacked. That is, the protruding pin 600 may extend along a direction perpendicular to one direction in which a plurality of battery cells 110 are stacked (the y-axis direction in FIG. 8).

When the protruding pins 600 are stacked along a direction perpendicular to the direction in which the battery cells 110 are stacked, the high-temperature venting gas and heat can be discharged along a direction perpendicular to the direction in which the battery cells 110 are stacked (the y-axis direction in FIG. 5).

Referring to FIG. 9, the protruding pins 600 according to an embodiment of the present disclosure extend along a direction perpendicular to the direction in which the battery cells 110 are stacked, but each protruding pin 600 is not continuously connected from one end to the other end of the battery module, and the center of the protruding pin 600 may be broken. That is, as compared to the protruding pins 600 shown in FIG. 8, the protruding pins 600 in the present embodiment may be considered to play a smaller role in guiding the discharge direction of the high-temperature venting gas and heat discharged from the venting unit 220V.

According to an embodiment of the present disclosure, the protruding pin 600 may be disposed between the venting parts 220V. That is, the protruding pin 600 is disposed between the venting parts 220V, so that the high-temperature venting gas and heat discharged from the venting parts 220V may be guided to be discharged in an intended direction without disturbing the discharge of the high-temperature venting gas and heat from the venting parts 220V.

The direction, shape, dimensions, etc. of the protruding pin 600 can be intentionally designed depending on the position of the venting valve (not shown) provided in the battery pack 1000, the venting method of the battery pack 1000, the components of the battery module 100 and the battery pack 1000, the arrangement of the components, and the like. Specifically, for example, the protruding pin 600 extending along the direction in which the battery cells 110 are stacked and the protruding pin 600 extending along the direction perpendicular to the direction in which the battery cells 110 are stacked can be applied in combination. The direction, shape, dimensions, and the like of the protruding pin 600 are not limited to the above-mentioned embodiments.

Meanwhile, according to an embodiment of the present disclosure, the protruding pin 600 may abut on the fire-resistant sheet 1300. In the present embodiment, since the protruding pin 600 abuts on the fire-resistant sheet 1300, the protruding pin 600 abuts and supports the separated fire-resistant sheet 1300 from the first, even if the fire-resistant sheet 1300 is separated from the pack cover 1200, so that the venting space VS between the battery module 100 and the fire-resistant sheet 1300 can be secured and maintained. That is, in the case of the battery pack 1000 according to the present embodiment, the safety of the battery pack 1000 is improved because the venting space VS through which high-temperature venting gas and heat flow can be secured and maintained between the battery module 100 and the fire-resistant sheet 1300. However, in the case of the present disclosure, the protruding pin 600 is not limited to a form in which it comes into contact with the fire-resistant sheet 1300. If the protruding pin 600 protrudes sufficiently to secure and maintain the venting space VS, the protruding pin 600 can be spaced apart from the fire-resistant sheet 1300 by a predetermined distance.

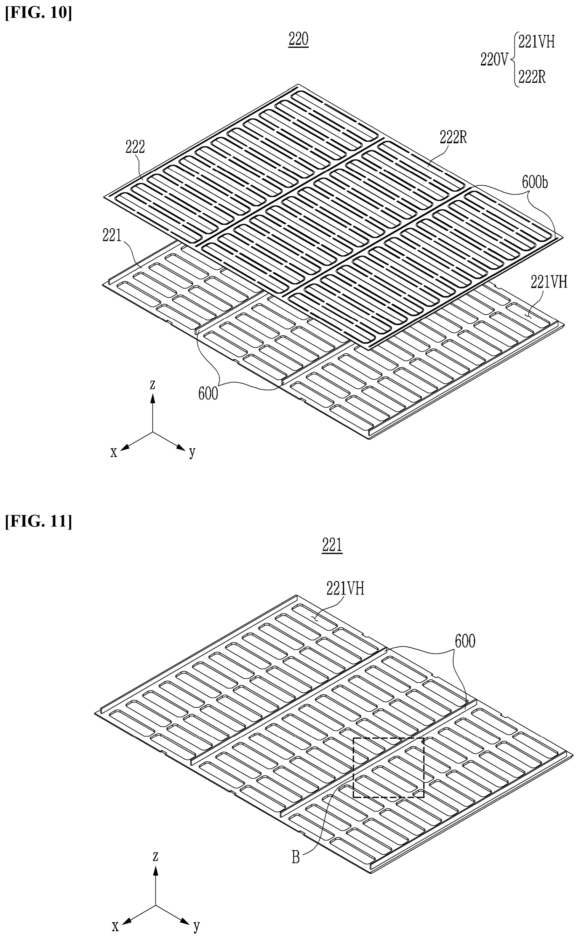

FIG. 10 is an exploded perspective view of a top cover assembly 220 according to an embodiment of the present disclosure.

Referring to FIGS. 3 to 6 and 10, according to an embodiment of the present disclosure, a battery module 100 includes a module frame 200 in which a battery cell stack 120 is housed and one side thereof is open; and a top cover assembly 220 that covers the open one side of the module frame 200, wherein a protruding pin 600 may be provided on the top cover assembly 220.

The protruding pin 600 may be formed in the module frame 200. More specifically, the protruding pin 600 may be formed in the top cover assembly 220 of the module frame 200.

Meanwhile, the battery module 100 may include a module frame 200 that houses battery cells 110. As an example, a battery cell stack 120 may be housed inside the module frame 200. The venting part 220V may be formed on one surface of the module frame 200.

Specifically, the module frame 200 may include a bottom frame 210 on which battery cells 110 are placed, and a top cover assembly 220 that covers one side of the battery cells 110. The venting part 220V according to the present embodiment may be formed in the top cover assembly 220. The battery cells 110 may be housed in the space formed by the bottom frame 210 and the top cover assembly 220. The bottom frame 210 and the top cover assembly 220 may be joined by a method such as welding at corresponding corners, so that the module frame 200 can cover the upper side, lower side, and both side parts of the battery cell stack 120.

For example, the bottom frame 210 according to the present embodiment may include a bottom part 211 and both side surface parts 212. The both side surface parts 212 may extend upward along a direction perpendicular to one surface of the bottom part 211 from both opposing sides of the bottom part 211. The bottom part 211 and both side surface parts 212 may cover the lower surface and both side surfaces of the battery cell stack 120. As mentioned above, one surface of the battery cells 110 in the battery cell stack 120 is parallel to the side surface parts 212 of the bottom frame 210, and the battery cells 110 may be stacked along a direction from one side surface part 212 to the other side surface part 212. The detailed structure of the top cover assembly 220 according to the present embodiment will be described later with reference to FIGS. 10 to 18.

On the other hand, in the battery module 100 according to the present embodiment, a first end plate 310 and a second end plate 320 may be disposed on one surface of the battery cell stack 120 in the direction in which the electrode lead 111 protrudes, and on the opposite surface thereof, respectively. The first end plate 310 and the second end plate 320 may be joined to the module frame 200 by a method such as welding. The module frame 200, the first end plate 310, and the second end plate 320 may include a metal material so as to have a predetermined strength. The battery cell stack 120 may be covered by the module frame 200, the first end plate 310, and the second end plate 320 to be protected from external impacts, vibrations, and the like.

The battery module 100 according to an embodiment of the present disclosure may include a first insulating cover 810 covering the inner surface of a first end plate 310, and a second insulating cover 820 covering the inner surface of a second end plate 320. The first insulating cover 810 may be located between the first end plate 310 and the first busbar frame 410, and the second insulating cover 820 may be located between the second end plate 320 and the second busbar frame 420. The first insulating cover 810 and the second insulating cover 820 may include an electrically insulating material, and can prevent the first end plate 310 and the second end plate 320 from coming into contact with an electrode lead 111 or a busbar 510 to thereby cause a short circuit.

Meanwhile, the battery module 100 according to the present embodiment may include a first busbar frame 410 and a second busbar frame 420 that cover one surface of the battery cell stack 120 in the direction in which the electrode lead 111 protrudes and the opposite surface thereof, respectively. The first busbar frame 410 may be located between the battery cell stack 120 and the first end plate 310, and the second busbar frame 420 may be located between the battery cell stack 120 and the second end plate 320. The first busbar frame 410 and the second busbar frame 420 may include an electrically insulating material, and can prevent the busbar 510 or terminal busbar 520 described below from coming into contact with other parts of the battery cell 110 other than the electrode lead 111 to thereby cause a short circuit.

The first busbar frame 410 and the second busbar frame 420 may be respectively equipped with a busbar 510, a terminal busbar 520, a module connector 530, and the like. Specifically, the busbar 510, the terminal busbar 520, the module connector 530, and the like may be equipped on a surface opposite to the surface facing the battery cell stack 120 of the first and second busbar frames 410 and 420. The busbar 510 may be electrically connected to the electrode lead 111 of the battery cell 110. As an example, the busbar 510 and the electrode lead 111 may be joined by welding. The first and second busbar frames 410 and 420 may be formed with a slit, and the electrode lead 111 may pass through the slit and be connected to the busbar 510. The battery cells 110 can be electrically connected in series or parallel via the busbars 510.

The terminal busbar 520 can be electrically connected to the electrode lead 111, and a portion of the terminal busbar can be exposed to the outside of the battery module 100. The battery module 100 can form an HV (high voltage) connection with other battery modules or electrical equipment via such a terminal busbar 520. Here, the HV connection is a connection that serves as a power source for supplying power that requires high voltage, and means a connection between battery cells or a connection between battery modules.

The module connector 530 may have a function of transmitting voltage information of the battery cells 110 or temperature information inside the battery module 100 to the outside. Therefore, a part of the module connector 530 can also be exposed to the outside of the battery module 100.

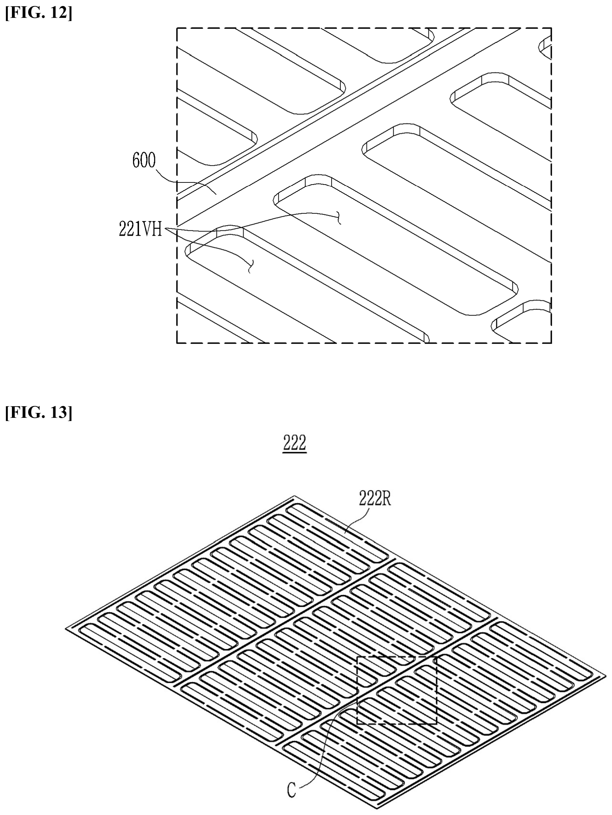

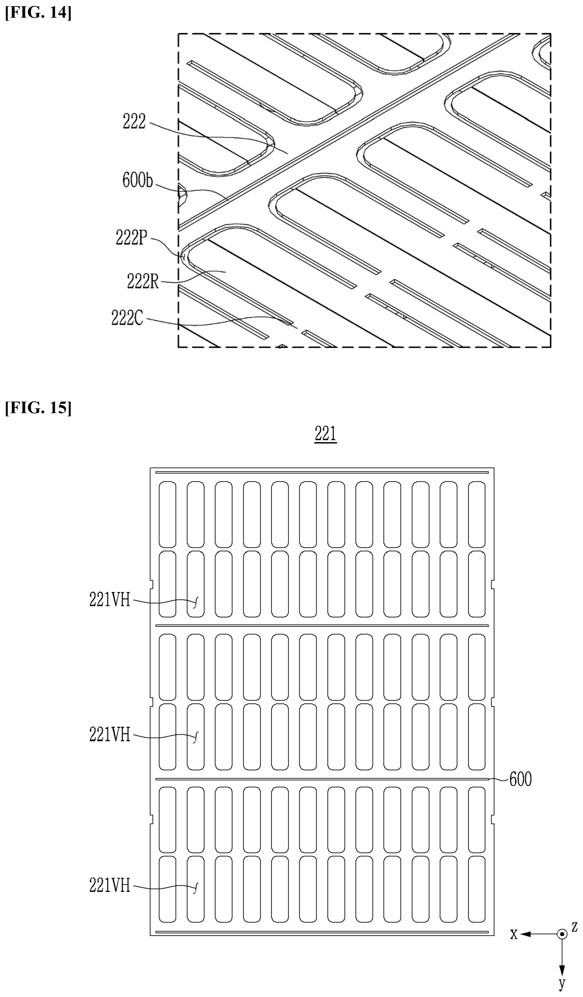

FIG. 11 is a perspective view showing a top plate of the top cover assembly 220 of FIG. 10. FIG. 12 is a partially enlarged perspective view showing the portion "B" of FIG. 11. FIG. 13 is a partial perspective view showing the top cover 222 of the top cover assembly 220 of FIG. 10. FIG. 14 is a partially enlarged perspective view showing the portion "C" of FIG. 13.

Referring to FIGS. 10 to 14, according to an embodiment of the present disclosure, the top cover assembly 220 may include a top plate 221 located on one side of the battery cells 110; and a top cover 222 covering one surface of the top plate 221.

As an example, the top plate 221 may include a metal material and be welded to the bottom frame 210 (see FIG. 4). On the other hand, the top cover 222 may include an FRB-silicone material or a MICA material. In order to guide the connection 222C connecting the rupture part 222R to break under a specified pressure, the top cover 222 may not be applied with a metal material.

Even if welding and joining between the top plate 221 and the top cover 222 are not possible, the top cover 222 can be fixed to the top plate 221 using a flange bolt (not shown) and a spacer (not shown). Fixing the top cover 222 using a flange bolt and a spacer can be useful in terms of the materials of the top plate 221 and the top cover 222.

Referring again to FIGS. 10 to 14, according to an embodiment of the present disclosure, the protruding pin 600 is formed in the top plate 221, and can protrude to one side through the top cover 222. That is, the protruding pin 600 formed in the top plate 221 can protrude toward one end through the slit 600b formed in the top cover 222 disposed at one end of the top plate 221.

Alternatively, a protruding part (not shown) into which the protruding pin 600 can be inserted may be formed in the top cover 222. In this case, the protruding pin 600 formed in the top plate 221 can be coupled to the protruding part of the top cover 222.

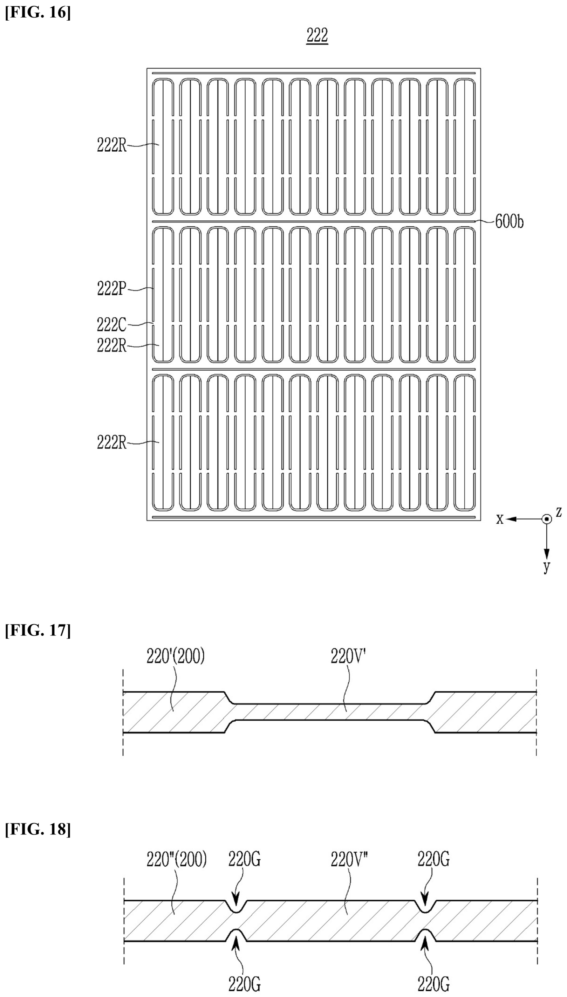

FIG. 15 is a plan view of a top plate 221 according to an embodiment of the present disclosure as viewed from above. FIG. 16 is a plan view of a top cover 222 according to an embodiment of the present disclosure as viewed from above.

Referring to FIGS. 3 to 5 and FIGS. 10 to 16, the venting part 220V according to an embodiment of the present disclosure may include at least one venting hole 221VH formed in the top plate 221 to discharge gas inside the module frame 200.

Further, the venting part 220V may include a rupture part 222R having a structure which is formed on the top cover 222, located to correspond to the venting hole 221VH and ruptured at a specified pressure or higher.

As mentioned above, the venting part 220V refers collectively to a mechanism that discharges high-temperature venting gas and heat generated inside the battery module 100 to the outside of the battery module 100. The venting part 220V according to the present embodiment may refer to a member that integrates a venting hole 221VH and a rupture part 222R.

As mentioned above, the module frame 200 may include a bottom frame 210 on which battery cells 110 are placed and a top cover assembly 220 covering one side of the battery cells 110, and the venting part 220V may be formed in the top cover assembly 220. As mentioned above, the top cover assembly 220 may include a top plate 221 located on one side of the battery cells 110 and a top cover 222 covering one surface of the top plate 221.

The venting part 220V may include a venting hole 221VH formed in the top plate 221 and a rupture part 222R formed in the top cover 222 and located corresponding to the venting hole 221VH. The rupture part 222R may have a structure that ruptures at a specified pressure or higher.

The venting hole 221VH may be a through-hole formed in the top plate 221. The rupture part 222R may cover the venting hole 221VH on one side of the top plate 221.

Referring again to FIGS. 1, 2, and 10 to 16, according to an embodiment of the present disclosure, an opening 222P is formed in a region excluding a connecting part 222C among the periphery of the rupture part 222R, and the rupture part 222R may be formed to be connected to the top cover 222 by the connecting part 222C.

The opening 222P may be formed in a region excluding a connecting part 222C among the periphery of the rupture part 222R.

The opening 222P refers to a perforated portion of the top cover 222. The rupture part 222R according to the present embodiment may be formed to be connected to the top cover 222 by the connecting part 222C. In other words, the rupture part 222R may be provided in the top cover 222 in a manner in which the opening 222P in the perforated form is formed in the top cover 222 excluding the connecting part 222C.

Further, when viewed along a direction perpendicular to one surface of the top cover 222, the opening 222P may be located on the outer periphery of the venting hole 221VH. Viewing along a direction perpendicular to one surface of the top cover 222 may correspond to viewing along the -z-axis direction on the xy plane, as in FIGS. 4, 15, and 16. Further, FIGS. 14 and 16, etc., depict that in any of the venting holes 221VH, the opening 222P is provided outside the venting hole 221VH.

When the venting part 220V is viewed from the inside of the battery module 100 through the above-mentioned structure, the venting hole 221VH is blocked by the rupture part 222R, and the opening 222P is covered by the top plate 221. In other words, since the venting hole 221VH is formed on a region on an inner side from the opening 222P, when viewed from the inside of the battery module 100, only the rupture part 222R is exposed through the venting hole 221VH, and the opening 222P is not exposed.

Thereby, in a general state where no thermal event occurs, the venting hole 221VH is blocked by the rupture part 222R, so the venting part 220V does not discharge internal gas. However, due to a thermal event or thermal runaway phenomenon, if high-temperature venting gas and heat are generated inside the battery module 100 and the internal pressure of the battery module 100 increases, the rupture part 222R may rupture. Specifically, if the increased internal pressure of the battery module 100 exceeds the limit strength of the connecting part 222C, the connecting part 222C may be broken, and the rupture part 222R may be separated from the top cover 222. Accordingly, the venting hole 221VH is opened, and high-temperature venting gas and heat may be discharged to the outside of the battery module 100 through the venting hole 221VH. More specifically, high-temperature venting gas and heat can be discharged through the venting hole 221VH to the venting space VS between the pack cover 1200 and the battery module 100. The high-temperature venting gas and heat flowing along the venting space VS can be discharged to the outside of the battery pack 1000 through a venting device (not shown) provided in the pack frame 1100 or the pack cover 1200.

FIGS. 17 and 18 are cross-sectional views showing venting parts 220V' and 220V" according to other embodiments of the present disclosure.

Referring to FIGS. 17 and 18, as mentioned above, the venting parts 220V' and 220V" refers collectively to a mechanism for discharging high-temperature venting gas and heat generated inside the battery module to the outside of the battery module.

The venting part 220V' according to another embodiment of the present disclosure may be a portion having a thinner thickness than adjacent regions in order to discharge high-temperature venting gas and heat. Specifically, the top cover assembly 220' of the module frame 200 may be a single plate-shaped part, and the venting part 220V' may be a portion having a thinner thickness than the peripheral region of the top cover assembly 220'. When high-temperature venting gas and heat are generated and the internal pressure of the battery module increases, the venting part 220V' having a relatively thin thickness may rupture, thereby discharging the high-temperature venting gas and heat.

Meanwhile, according to another embodiment of the present disclosure, the venting part 220V" may be a portion formed with a groove 220G along its periphery to discharge high-temperature venting gas and heat. Specifically, the top cover assembly 220" of the module frame 200 may be in a single plate shape, and the venting part 220V" may be an inner portion of the groove 220G formed in the top cover assembly 220". When high-temperature venting gas and heat are generated and the internal pressure of the battery module increases, the groove 220G may first rupture and the venting part 220V" may open, thereby discharging the high-temperature vent gas and heat.

According to another embodiment of the present disclosure, a device comprising the battery pack 1000 is provided.

One or more battery modules according to an embodiment of the present disclosure described above may be mounted together with various control and protection systems such as a battery management system (BMS), a battery disconnect unit (BDU), and a cooling system, to form a battery pack 1000.

The battery modules 100 or the battery pack 1000 may be applied to various devices , which include, for example, transportation vehicles such as electric bicycles, electric vehicles, and hybrids. However, without being limited thereto, the battery modules or the battery pack may be applied to various devices using secondary batteries.

In the embodiments above, expressions indicating directions such as "front," "rear," "left," "right," "up," and "down" have been used. These expressions are used only to facilitate the description, and may vary, for example, depending on the location of a target object or an observer.

While the embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

100: battery module
110: battery cell
120: battery cell stack
220: top cover assembly
221: top plate
222: top cover
220V: venting part
600: protruding pin
1000: battery pack
1300: fire-resistant sheet

## Claims

1. A battery pack, comprising:
a battery module;
a pack frame in which the battery module is housed and one side thereof is open;
a pack cover that covers the open one side of the pack frame; and
a fire-resistant sheet attached to one end of the pack cover,
wherein the battery module comprises:
a battery cell stack in which a plurality of battery cells are stacked;
a venting part formed on one surface of the battery module to discharge venting gas; and
a protruding pin that protrudes toward the pack cover on one surface of the battery module.

2. The battery pack according to claim 1,
wherein the protruding pin extends along the direction in which the battery cells are stacked.

3. The battery pack according to claim 1,
wherein the protruding pin extends along a direction perpendicular to the direction in which the battery cells are stacked.

4. The battery pack according to claim 1,
wherein the protruding pin is disposed between the venting parts.

5. The battery pack according to claim 1,
wherein the protruding pin abuts on the fire-resistant sheet.

6. The battery pack according to claim 1,
wherein the battery module comprises a module frame in which the battery cell stack is housed and one side thereof is open; and a top cover assembly that covers the open one surface of the module frame,
wherein the protruding pin is provided on the top cover assembly.

7. The battery pack according to claim 6,
wherein the top cover assembly comprises:
a top plate located on one side of the battery cells; and
a top cover that covers one surface of the top plate.

8. The battery pack according to claim 7,
wherein the protruding pin is formed on the top plate, and protruded to one side through the top cover.

9. The battery pack according to claim 7,
wherein the venting part includes at least one venting hole formed in the top plate to discharge gas inside the module frame.

10. The battery pack according to claim 9,
wherein the venting part includes a rupture part having a structure which is formed on the top cover, located to correspond to the venting hole, and ruptured at a specified pressure or higher,

11. The battery pack according to claim 10,
wherein an opening is formed in a region excluding a connecting part among the periphery of the rupture part, and
the rupture part is formed to be connected to the top cover by the connecting part.

12. A device comprising the battery pack according to claim 1.
